# EUROPEAN PATENT SPECIFICATION

(11) **EP 1 156 690 B1**
(45) Date of publication and mention of the grant of the patent: **22.03.2006**
(21) Application number: 01110791.9
(22) Date of filing: 04.05.2001
(51) Int. Cl.: H04Q 7/36

(54) **Channel acquisition method for a wireless communication system and subscriber station**
Kanalbelegungsverfahren für ein drahtloses Kommunikationssystem und Teilnehmerstation
Méthode d'acquisition de canal dans un système de communication sans fil et station mobile

(30) Priority: 17.05.2000 EP 00250147
(43) Date of publication of application: 21.11.2001
(73) Proprietor: DEUTSCHE THOMSON-BRANDT GMBH, 78048 Villingen-Schwenningen (DE)
(72) Inventor: Klank, Otto, 31275 Lehrte-Arpke (DE)
(74) Representative: Schäferjohann, Volker

(56) References cited:
- EP-A- 0 430 173
- EP-A- 0 635 989
- US-A- 5 920 819
- US-A- 6 009 332

## Description

The invention relates to a channel acquiring method for a wireless communication system, in particular an indoor network, comprising a plurality of subscriber stations, each of said subscriber stations having a transmitter and a receiver, whereby information can be independently exchanged between said subscriber stations using respective transmitters and receivers and a plurality of channels available for communication in said wireless communication system. The invention further relates to a subscriber station fore a wireless communication system.

### Background

For private homes and also local area networks (LAN) developments are going on to connect all kinds of devices together, as TV, personal computer, stereo systems, telephone etc. Several devices located in an area and belonging to a group of dedicated users, for example in the same apartment or in the same building, may be considered to be part of a so-called cluster. This may also include nearby-stations outside the respective building. Information exchange between the devices of the cluster and optionally between the cluster devices and stations of other near-by-clusters may be based on wireless RF communication. However, a combination of wireless and wireline RF communication may also be provided.

For the RF communication between the devices and/or the outside stations there will only be a limited number of RF channels available. Devices of a cluster, and/or optionally such of different clusters which communicate with each other, use one (or optionally more than one) channel by sharing a plurality of time and/or frequency slots. This normally causes no interference problems. The devices and the stations of the various clusters may use/reuse the RF channels available for communication under certain conditions (distance, interference level, etc.). Therefore, communication signals from devices in other clusters in most cases cause interference problems with respect to communication of the devices of the cluster considered. In situations of high communication traffic, interference may prevent a reuse of the same channel and, if no more channels are available, it blocks usage of a desired service.

In order to avoid conflicting situations, before entering and using a preferred channel for communication each device separately performs a channel testing procedure. In the channel testing procedure, on the basis of communication parameters the preferred channel is tested whether it enables wireless communication, preferably optimised communication over the preferred channel.

From EP-A-0 635 989 a method for dynamically assigning a channel for communication between a base station and a mobile station in a cellular communication system is known. Within this method a plurality of antennas respectively covering sectors of the service area of the base station are utilized for channel testing.

### Invention

It is an object of the present invention to disclose a channel acquiring method for a wireless communication system for improving communication channel efficiency as cited in claim 1 to 10.

According to the invention a channel acquiring method for a wireless communication system, e.g. an indoor network, comprising a plurality of subscriber stations is provided, each of said subscriber stations having a transmitter and a receiver, whereby information can be independently exchanged between said subscriber stations using respective transmitters and receivers and a plurality of channels available for communication in said wireless communication system, said method comprising the steps of:
a) testing a group of channels (C1 to Cm, m ≥ 2) of said plurality of channels available for communication between a first and a second subscriber station (Sx, Sy; 1 ≤ x ≤ n, 1 ≤ y ≤ n) of said plurality of subscriber stations (S1 to Sn) by means of an antenna or antennae arrangement with omni directional characteristic using a first set of communication reference parameters (I1, M1);
b) selecting, if a channel (Cx, 1 ≤ x ≤ m) of said group of channels (C1 to Cm) meets said first set of communication parameters (I1, M1), such channel for said wireless communication between said first and said second subscriber station (Sx, Sy);
c) testing said selected channel (Cx) by means of a directional antenna with a second set of communication parameters (I2, M2);
d) acquiring said selected channel (Cx) for further wireless communication between said first and said second subscriber station (Sx, Sy) and possibly further stations, if said channel meets said second set of communication reference parameters (I2, M2).

The disclosed method improves the utilisation or channel efficiency and avoids negative consequences due to more frequent (re)use of the channels in wireless communication systems. On the basis of information derived from channel testing by means of a directional antenna second communication reference parameter are provided, which in turn are used to decide whether a selected channel may be used for further communication. Using the directional antenna for channel testing in the channel entering method allows distinguishing channels with a relatively high interference power in one direction different to the sought communication direction and channels with a relatively high interference power in all directions. At least for the connections to stations located in a direction opposite to the direction of the main interferer, some other communication reference parameters can be accepted which are less demanding. If results received from directional antenna detection are taken into consideration, likelihood will increase that a channel is entered which meets communication parameters necessary for correct communication between subscriber stations in the wireless communication system.
Therefore, the method disclosed improves efficiency of wireless communication in the system and decreases the overall failure rate of the wireless communication system.

Further advantageous embodiments are apparent from the dependent claims.

The invention also relates to a subscriber station for a wireless communication system as claimed in claim 10.

### Drawings

Exemplary embodiments of the invention are illustrated in the drawings and are explained in more detail in the following description.

In the figures:
- Fig. 1: shows a schematic representation of a wireless communication system;
- Fig. 2: shows a diagram explaining different communication reference parameters; and
- Fig. 3: an example of a directional antenna for use in the invention.

### Exemplary embodiments

The general concept of a mixed frequency and time division multiplex communication system is described in EP-A-0 853 400. For the disclosure of the invention it is therefore expressively referred to this document, in particular to the disclosure of the channel entering process.

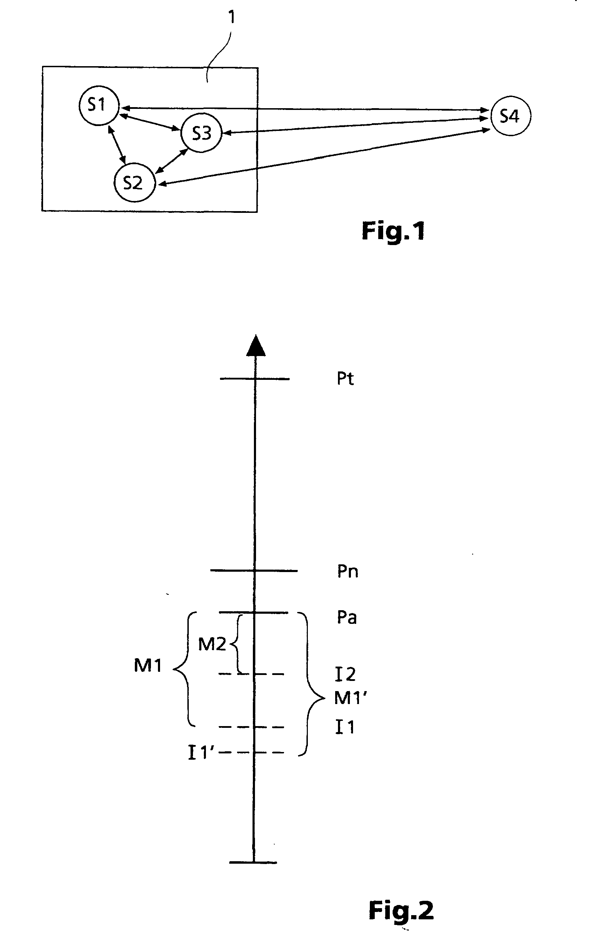

Fig. 1 shows a RF communication system with a plurality of subscriber stations S1,...,S4. Three of the subscriber stations S1, S2, S3 are located within an area or cluster 1, as an apartment or a building. One subscriber station S4 is located outside the cluster 1. Subscriber station S4 is a transceiver station transmitting RF information that in principle can be received by subscriber stations S1 and/or S2 and/or S3. In addition, RF signals can be independently exchanged between the cluster subscriber stations S1, S2, S3. There may be some more stations (not shown) which cannot be received reliably by the subscriber stations S1, S2, S3 but which generate an interference level at the location of stations S1, S2, S3. The subscriber stations S1, S2, S3 may be part of a local area network (LAN) comprising, for example TES, personal computers, stereo systems, telephones etc.

For communication between the subscriber stations S1, S2, S3 and between S4 and further stations (not shown) and optionally between stations S1 S2, S3, S4 there will only be a limited number of RF channels available. The subscriber stations S1, S2, S3, S4 use the RF channels available for communication by sharing a quantity of time and/or frequency slots of a channel, and, if appropriate (e.g. different clusters), by using different channels.

Before a channel is used for communication between two or more subscriber stations, for example between S1 and S2, the channel is tested to check whether the channel meets requirements necessary for wireless communication over the channel. A set of communication reference parameters is used to proof a channel's usability for communication. In general, communication reference parameters are used to monitor the channel's transmission quality. A channel acquisition or entering process is started with testing channels available whether they are free or occupied.

In Fig. 2 examples of communication reference parameters usable for channel testing are depicted. During channel testing procedure, a certain interference power reference value 11 or I2 and/or a certain margin M1 or M2 may be applied in order to separate between channels usable for communication between subscriber stations S1 and S2 and channels occupied, respectively. The interference power reference values I1 and I2 represent different levels of interference power resulting from wireless communication other than the communication under test. The test procedure may include more sophisticated methods, e.g. a correlation of the received channel signals with known (assumed) pattern or sequences in order to be able to detect relatively weak signals and distinguish between system-conform signals / interference and others (which may have different impacts and may imply application of different parameter sets).

In addition, the channel test procedure needs to take into consideration a margin M1, M2 for worse conditions (e.g. moving subscriber stations), and /or switching on another station of the considered cluster and/or a station belonging to an existing (operating) but interfering cluster), which affect the communication between subscriber stations S1 and S2 and may result in further decrease of channel efficiency or communication quality. In any case, the sum (I1+M1; I2+M2) of the respective interference power reference value I1 or I2 and the respective margin M1 or M2 has to be lower than an acceptable interference power Pa (see Fig. 2) which also is a characteristic channel parameter. The acceptable interference power Pa for a communication is a somewhat fixed parameter in the system and therefore is regarded as being a constant. This parameter is fixed due to other parameters in the communication system, such as maximum transmission power, type of allowable antennae, frequency range, error correction method, etc..

Thus, to be on the safe side, a relative big margin M1 or M2 has to be applied in channel testing. This presumably leads to a channel utilisation or efficiency far beyond theoretical values or beyond such values that could be reached if the positioning of the devices would have been known. If an adequate margin is not applied and no other measures are taken, communication may partially be interrupted, or the communication system may break down in various clusters. In order to avoid such corruptions in communication, a relatively broad margin will be used for channel testing. So the margin is regarded as a safety range for the communication. Even in cases that the local conditions (e.g. more communication traffic in neighbouring clusters, changed positions during communication, etc.) will change during communication, the communication will not be interrupted due to this margin.

The difference between a minimal input power Pm (see Fig. 2) and the interference power reference value I1 or I2 is sometimes to referred as interference distance. In Fig. 2, a transmitted power Pt and a nominal input power Pn are also depicted.

In the following a method for entering a channel, e.g. a RF channel, used for wireless communication between two subscriber stations, for example between subscriber stations S1 and S2, is described. At first, station S1 performs a channel test with a very demanding set of communication parameters I1' and M1'. In this test, an omni directional antenna is used. In the example described the set of communication reference parameters comprises the interference power reference value I1' and the margin M1' (see Fig. 2). However, the new channel entering method is independent of the number and the nature of the communication reference parameters used for channel testing. Because these parameters are very demanding, e.g. a margin of 30dB from the acceptable interference power Pa, is required, there will sometimes be a negative result for the channel test, especially in an area of a big city, with lots of flats being concentrated in a small area. Thus, if none of the tested channels fulfil these parameters, station S1 will test the channel with a less demanding set of communication parameters I1, M1 as shown in Fig. 2. Also in this phase the test is being done with an omni-directional antenna.

Following, if at least one of the tested channels meets the set of communication reference parameters I1, M1 for the communication between the subscriber stations S1 and S2, the at least one channel is selected and the channel is entered for a first wireless communication between the subscriber stations S1 and S2. It is the station that wants to initiate a communication that selects the channel to establish a service.

The margin M1 is preferably chosen below a theoretically optimal value (which would have been used in a case without application of directional antennae). This allows further channels to be included in the following test steps.

Then, in another test phase, a directional antenna is used to review the selection of the at least one channel. By means of the directional antenna a signal arriving angle of the communication signal transmitted between the first and the second subscriber station S1, S2 is detected. This is performed, e.g. by station S2 whilst S1 transmits, e.g. a "communication request signal". In addition, a signal arriving angle of the main interference signals resulting from other communication in the wireless communication system is detected by means of the directional antenna. This test part requires that no signal is being transmitted by the other (corresponding) station, i.e. by S1 if S2 performs the test (the channel is used only partially, the signal switched off during certain time periods). Following, the detected signal arriving angle of peak signals of the communication signal and the detected signal arriving angle of peak signals of the interference signals are compared.

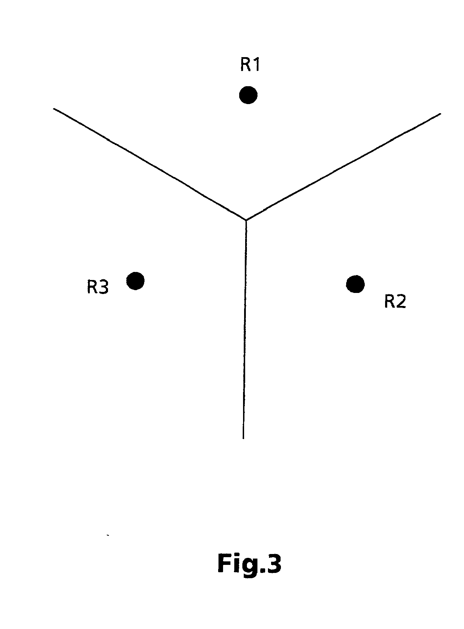

Fig. 3 shows a cross-sectional view of a directional antenna, which can be used in this invention. This antenna consists of three separate antenna rods R1, R2, R3, which can be used separately or in combination for data communication. To each antenna belongs a reflector having a "V"-form with an opening angle of 120°. The reflector serves for shielding the antenna rod against radiation from directions other than the directions falling in the opening angle. Such a kind of directional antenna is relatively simple and can also be used for portable devices. There are other types of directional antennae that can be used in this invention. For a first channel test, all the different antenna rods can be used in combination. For determining the direction of signals, the antenna rods will be used separately during reception.

On the basis of the results of the signal arriving angle comparison another set of communication reference parameters I2 and M2 is provided. The at least one channel selected/entered for first communication between the subscriber stations S1 and S2 is selected for further wireless communication between the subscriber stations S1 and S2 and possibly further stations preferably of the same cluster if the selected channel meets the other set of communication reference parameters I2 and M2, which can be less or more demanding than the communication reference parameters I1, M1. Therefore, the station that performed the "review test" -e.g., as assumed before, S2 whilst S1 was transmitting a "communication request signal"- transmits a "channel acceptance" signal.

Relatively high values of the margin M corresponding with relatively low values of the interference power I are provided for the other set of communication reference parameters I2, M2, if the detected signal arriving angle of the peak signal of the communication signal and the detected signal arriving angle of the peak signal of the interference signal are equal or approximately equal, i.e. communication signal and interference signal(s) arrive from nearly the same direction. Lower values of M corresponding with higher values of I are provided for the other set of communication reference parameters I2, M2, if the detected signal arriving angle of the peak signal of the communication signal and the detected signal arriving angle of the peak signal of the interference signal differ by about 180°, i.e. communication signal and interference signal arrive from nearly opposite directions.

In the latter case the value of M2 is preferably chosen below the value of M1, which corresponds with I2 being higher than I1 (see Fig. 2). On the other hand, the test result might be ignored in the first case (similar arriving angles of the communication and interference signals) under certain conditions. For example, if station S2 performs the respective test, it can be assumed that the preceding test, based on I1, M1 and performed by station S1, covers the first case due to the fact that in this case S1 is nearer to the source of interference (which must be outside the line S1 -S2).

Intermediate values may be provided for the other set of communication reference parameters I2, M2, if a difference between the detected signal arriving angle of the peak signal of the communication signal and the detected signal arriving angle of the peak signal of the interference signal lies in between the two above defined positions about 0° and about 180°.

If, while testing the channels available for communication in the wireless communication system on the basis of the set of communication parameters I1 and M1, no channel meeting communication parameters I1, M1 is found, at least one further set of communication parameters I3 and M3 may be provided for testing a group of channels anew. The at least one further set of communication parameters I3, M3 is selected to provide for wireless communication between subscriber stations S1 and S2 a channel of, compared to communication on the basis of parameters I1 and M1, still sufficient quality, so that information can be transmitted between the subscriber stations S1 and S2.

According to a further aspect of the invention, the at least one channel selected and entered for wireless communication between the subscriber stations S1 and S2 may be considered as a provisional selection. The provisionally selected channel may be used for a first set-up communication between the subscriber stations S1 and S2. The channel provisionally selected could later be reviewed on 'both sides', i.e. on the side of the subscriber station S1 and on the side of the subscriber station S2, respectively, and selected for further communication between the subscriber stations S1 and S2, only if communication can be performed with sufficient transmission quality on 'both sides'. This may include, e.g., that the transmissions in both directions (S1 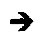 S2 and S2 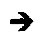 S1) provide sufficient low long-term error rates. For later review the directional antenna may be used.

It is to understand, that the channel entering method described is essentially independent of the method used for first channel selection as well as the set of communication parameters. In any case, after entering a channel for first communication, the first selection is reviewed by means of the directional antenna. If it is mandatory, that every subscriber station is equipped with a directional antenna, the very first test phase with communication reference values I1' and M1' can be omitted, because a verification of the channel with directional antenna is guaranteed.

The person skilled in the art will understand, that the described channel entering method may be performed by all subscriber stations S1, ..., S4, so that overall communication efficiency can be improved in the wireless communication system.

## Claims

1. Method for channel acquiring in a wireless communication system, e.g. an indoor network, comprising a plurality of subscriber stations (S1 to Sn, n ≥ 2), each of said subscriber stations (S1 to Sn) having a transmitter and a receiver, whereby information can be exchanged between said subscriber stations (S1 to Sn) using respective transmitters and receivers and a plurality of channels available for communication in said wireless communication system, said method comprising the steps of:
a) testing a group of channels (C1 to Cm, m ≥ 2) of said plurality of channels available for communication between a first and a second subscriber station (Sx, Sy; 1 ≤ x ≤ n, 1 ≤ y ≤ n) of said plurality of subscriber stations (S1 to Sn) by means of an antenna or antennae arrangement with omni directional characteristic using a first set of communication reference parameters (I1, M1);
b) selecting, if a channel (Cx, 1 ≤ x ≤m) of said group of channels (C1 to Cm) meets said first set of communication parameters (I1, M1), such channel for said wireless communication between said first and said second subscriber station (Sx, Sy);
c) testing said selected channel (Cx) by means of a directional antenna with a second set of communication parameters (I2, M2);
d) acquiring said selected channel (Cx) for further wireless communication between said first and said second subscriber station (Sx, Sy) and possibly further stations, if said channel meets said second set of communication reference parameters (I2, M2).

2. Method according to claim 1, **characterised in that**, said first and said second set of communication reference parameters concern a first interference value (I1) and/or a first margin (M1) for deviations from the first interference value (I1) and a second interference value (I2) and/or a second margin (M2) for deviations from the second interference value (I2), respectively.

3. Method according to claim 2, **characterised in that**, the test inclusive steps b) to d) is used in particular in cases, where a preceding test according to step a) with a broader margin (M1'), i.e. M1' > M1, has brought no acceptable result, i.e. if no channel provides the broader margin (M1').

4. Method according to one of claims 1 to 3, **characterized in that**, in the case that more than one channel meet the reference values (M1) and (I1) in the test step a), the channel with the lowest interference or test margin or one channel out of the class with the best values is chosen for further tests according to steps b), ..., d).

5. Method according to claim 4, **characterised in that**, in the case that step d) has not been succeeded, but at least one more channel fulfilling step a) is available, at least this channel is additionally tested according to the steps b) ... d) .

6. Method according to one of the claims 1 to 5, **characterised in that**, said testing in step c) is performed with the steps of:
- detecting a signal arriving angle(s) of a communication signal(s) transmitted between said first and said second subscriber station (Sx, Sy) at least by one of these stations;
- detecting a signal arriving angle(s) of an interference signal(s) resulting from other communication(s) between subscriber stations in said wireless communication system; and
- comparing said detected signal arriving angle(s) of peak signals of said communication signals with said detected signal arriving angle(s) of peak signals of said interference signals.

7. Method according to claim 6, **characterised in that**, higher values of the margin M corresponding with lower values of the interference power I are provided for said second set of communication reference parameters (I2, M2), if said detected signal arriving angle of said peak signal of said communication signal and said detected signal arriving angle of said peak signal of said interference signal(s) are equal whilst lower values of the margin M corresponding to higher values of the interference power I are provided for said second set of communication reference parameters (I2, M2), if said detected signal arriving angle of said peak signal of said communication signal and said detected signal arriving angle of said peak signal of said interference signal(s) differ by about 180°.

8. Method according to claim 7, **characterised in that**, intermediate values I2i, M2i; with M2₁₈₀<M2i<M1 and I2₁₈₀>I2i>I1; are provided for said second set of communication reference parameters (I2, M2), if a difference between said detected signal arriving angle of said peak signal of said communication signal and said detected signal arriving angle of said peak signal of said interference signal(s) is in a range between the two ranges defined for the positions 0° and 180°.

9. Method according to one of the preceding claims, wherein said channel acquiring method is used for acquiring a channel for communication between at least one other pair of subscriber stations (Sj and Sk; 1 ≤ j ≤ n, j ≠ x, 1 ≤ k ≤ n, k ≠ y) .

10. Subscriber station for a wireless communication system having a directional antenna and means for performing the method according to one of the claims 1 to 9.

## Patentansprüche

1. Verfahren zur Kanalerfassung in einem drahtlosen Kommunikationssystem, z.B. einem Innenraum-Netzwerk, umfassend eine Mehrzahl von Teilnehmer-Stationen (S1 bis Sn, n > 2), von denen jede einen Sender und einen Empfänger aufweist, wobei zwischen den Teilnehmer-Stationen (S1 bis Sn) unter Verwendung entsprechender Sender und Empfänger und einer Mehrzahl von Kanälen, die für die Kommunikation in dem drahtlosen Kommunikationssystem verfügbar sind, Informationen ausgetauscht werden können, wobei das Verfahren die Schritte umfasst:
a) Prüfen einer Gruppe von Kanälen (C1 bis Cm, m ≥ 2) der Mehrzahl von kanälen, die zur Kommunikation zwischen einer ersten und einer zweiten Teilnehmer-Station (Sx, Sy; 1 ≤ x ≤ n, 1 ≤ y ≤ n) der Mehrzahl von Teilnehmer-Stationen (S1 bis Sn) verfügbar sind, mittels einer Antenne oder einer Antennenanordnung mit Rundstrahlcharakteristik unter Verwendung einer ersten Gruppe von Kommunikations-Bezugs-Parametern (I1, M1);
b) falls ein Kanal (Cx, 1 ≤ x ≤ m) der Gruppe von Kanälen (C1 bis Cm) die erste Gruppe von Kommunikations-Parametern (I1, M1) erfüllt, einen solchen Kanal für die drahtlose Kommunikation zwischen der ersten und zweiten Teilnehmer-Station auswählen;
c) Prüfen des ausgewählten Kanals (Cx) mittels einer Richtantenne mit einer zweiten Gruppe von Kommunikations-Parametern (I2, M2);
d) Erfassen des ausgewählten Kanals (Cx) für weitere drahtlose Kommunikation zwischen der ersten und der zweiten Teilnehmer-Station (Sx, Sy) und gegebenenfalls weiterer Stationen, wenn der Kanal die zweite Gruppe von Kommunikations-Bezugs-Parametern (I2, M2) erfüllt.

2. Verfahren nach Anspruch 1, **dadurch gekennzeichnet, dass** die erste und die zweite Gruppe von Kommunikations-Bezugs-Parametern einen ersten Störwert (I1) und/oder eine erste Spanne (M1) für Abweichungen von dem ersten Störungswert (I1) bzw. einem zweiten Störungswert (I2) und/oder eine zweite Spanne (M2) für Abweichungen von dem zweiten Störungswert (I2) betreffen.

3. Verfahren nach Anspruch 2, **dadurch gekennzeichnet, dass** die Prüfung einschließlich der Schritte b) bis d) insbesondere in Fällen verwendet wird, bei denen eine vorhergehende Prüfung gemäß Schritt a) mit einer breiteren Spanne (M1'), d.h. M1' > M1, kein annehmbares Ergebnis gebracht hat, d.h. wenn kein Kanal die breitere Spanne (M1') vorsieht.

4. Verfahren nach einem der Ansprüche 1 bis 3, **dadurch gekennzeichnet, dass** für den Fall, dass mehr als ein Kanal die Bezugswerte (M1) und (I1) bei dem Prüfungsschritt a) erfüllt, der Kanal mit dem niedrigsten Störungswert oder der niedrigsten Prüfungsspanne oder ein Kanal außerhalb der Klasse mit den besten Werten für weitere Prüfungen gemäß den Schritten b), ... , d) ausgewählt wird.

5. Verfahren nach Anspruch 4, **dadurch gekennzeichnet, dass** für den Fall, dass der Schritt d) nicht erfolgreich war, aber wenigstens ein weiterer Kanal, der den Schritt a) erfüllt, verfügbar ist, wenigstens dieser Kanal zusätzlich gemäß den Schritten b) ... d) geprüft wird.

6. Verfahren nach einem der Ansprüche 1 bis 5, **dadurch gekennzeichnet, dass** die Prüfung beim Schritt c) mit den Schritten ausgeführt wird:
Feststellen eines Signal-Ankunftswinkels (von Signal-Ankunftswinkeln) eines Kommunikationssignals (von Kommunikationssignalen), das bzw. die zwischen der ersten und der zweiten Teilnehmer-Station (Sx, Sy) ausgesendet wird bzw. ausgesendet werden, wenigstens durch eine dieser Stationen;
- Feststellen eines Signal-Ankunftswinkels (von Signal-Ankunftswinkeln) eines Störungssignals (von Störungssignalen), die von einer anderen Kommunikation (von anderen Kommunikationen) herrühren, in dem drahtlosen Kommunikationssystem; und
- Vergleichen des festgestellten Signal-Ankunftswinkels (von festgestellten Signal-Ankunftswinkeln) von Spitzensignalen der Kommunikationssignale mit dem festgestellten Signal-Ankunftswinkel (den festgestellten Signal-Ankunftswinkeln) von Spitzensignalen der Störungssignale.

7. Verfahren nach Anspruch 6, **dadurch gekennzeichnet, dass** höhere Werte der Spanne M, die niedrigeren Werten der Störungsstärke I entsprechen, für die zweite Gruppe von Kommunikations-Bezugs-Parametern (I2, M2) vorgesehen werden, wenn der festgestellte Signal-Ankunftswinkel des Spitzensignals des Kommunikationssignals und der festgestellte Signal-Ankunftswinkel des Störungssignals (der Störungssignale) gleich sind, während niedrigere Werte der Spanne M, die höheren Werten der Störungsstärke I entsprechen, für die zweite Gruppe von Kommunikations-Bezugs-Parametern (I2, M2) vorgesehen werden, wenn der festgestellte Signal-Ankunftswinkel des Spitzensignals des Kommunikationssignals und der festgestellte Signal-Ankunftswinkel des Spitzensignals (der Spitzensignale) sich um etwa 180° unterscheiden.

8. Verfahren nach Anspruch 7, **dadurch gekennzeichnet, dass** Zwischenwerte I2i, M2i; mit m2₁₈₀<M2i<M1 und I2₁₈₀> I2i>I1; für die zweite Gruppe von Kommunikations-Bezugs-Parametern (I2, M2) vorgesehen werden, wenn ein Unterschied zwischen dem festgestellten Signal-Ankunftswinkel des Spitzensignals des Kommunikationssignals und dem festgestellten Signal-Ankunftswinkel des Spitzensignals des Störungssignals (der Störungssignale) in einem Bereich zwischen den beiden Bereichen liegen, die für die Positionen 0° und 180° definiert sind.

9. Verfahren nach einem der vorhergehenden Ansprüche, bei dem das Kanal-Erfassungsverfahren zur Erfassung eines Kanals für die Kommunikation zwischen wenigstens einem weiteren Paar von Teilnehmer-Stationen (Sj und Sk; 1 ≤ j < n, j ≠ x, 1 ≤ k ≤ n, k ≠ y) verwendet wird.

10. Teilnehmer-Station für ein drahtloses Kommunikationssystem mit einer Richtantenne und Mitteln zur Ausführung des Verfahrens nach einem der Ansprüche 1 bis 9.

## Revendications

1. Procédé d'acquisition de canal dans un système de communication sans fil, par exemple un réseau intérieur, comportant une pluralité de postes d'abonné (S1 à Sn, n ≥ 2) , chacun desdits postes d'abonné (S1 à Sn) comportant un émetteur et un récepteur, grâce auxquels des informations peuvent être échangées entre lesdits postes d'abonné (S1 à Sn) en utilisant les émetteurs et récepteurs respectifs et une pluralité de canaux disponibles pour une communication dans ledit système de communication sans fil, ledit procédé comportant les étapes suivantes :
a) test d'un groupe de canaux (C1 à Cm, m ≥ 2) de ladite pluralité de canaux disponibles pour la communication entre un premier et un deuxième postes d'abonné (Sx, Sy ; 1 ≤x ≤ n, 1 ≤ y ≤ n) de ladite pluralité de postes d'abonné (S1 à Sn) au moyen d'une antenne ou d'une configuration d'antennes de caractéristique omnidirectionnelle en utilisant un premier jeu de paramètres de communication de référence (I1, M1) ;
b) si un canal (Cx, 1 ≤x ≤ m) dudit groupe de canaux (C1 à Cm) correspond audit premier jeu de paramètres de communication (I1, M1), sélection d'un tel canal pour ladite communication sans fil entre lesdits premier et deuxième postes d'abonné (Sx, Sy) ;
c) test dudit canal sélectionné (Cx) au moyen d'une antenne directionnelle avec un deuxième jeu de paramètres de communication (12, M2) ;
d) acquisition dudit canal sélectionné (Cx) pour poursuivre la communication sans fil entre lesdits premier et deuxième postes d'abonné (Sx, Sy) et éventuellement d'autres postes, si ledit canal correspond audit deuxième jeu de paramètres de communication de référence (12, M2).

2. Procédé selon la revendication 1; **caractérisé en ce que**, lesdits premier et deuxième jeux de paramètres de communication de référence concernent respectivement un premier niveau de parasites (I1) et/ou une première marge (M1) pour des écarts par rapport audit premier niveau de parasites et un deuxième niveau de parasites (I2) et/ou une deuxième marge (M2) pour des écarts par rapport au deuxième niveau de parasites (12).

3. Procédé selon la revendication 2, **caractérisé en ce que**, on utilise le test comprenant les étapes b) à d) particulièrement dans les cas où un test précédent conforme à l'étape a) avec une marge plus importante (M1'), c'est-à-dire M1' > M1, n'a pas fourni de résultat acceptable, c'est-à-dire si aucun canal ne correspond à la marge plus importante (M1').

4. Procédé selon l'une des revendications 1 à 3, **caractérisé en ce que**, dans le cas où plus d'un canal correspond aux valeurs de référence (M1) et (I1) dans l'étape de test a), on choisit le canal qui présente le plus faible niveau de parasites ou la plus faible marge de test ou le canal en dehors du groupe avec les meilleures valeurs pour poursuivre les test conformes aux étapes b), ..., d).

5. Procédé selon la revendication 4, **caractérisé en ce que**, dans le cas où l'étape d) n'a pas donné de résultat positif mais où est disponible au moins un canal qui remplit les conditions de l'étape a), ce canal est en plus testé conformément aux étapes b) à d).

6. Procédé selon l'une des revendications 1 à 5, **caractérisé en ce que**, ledit test de l'étape c) est réalisé avec les étapes suivantes :
- détection du ou des angle(s) d'incidence d'un ou de plusieurs signaux de communication transmis entre lesdits premier et deuxième postes d'abonnés (Sx, Sy) au moins par un de ces postes ;
- détection du ou de angle(s) d'incidence d'un ou de plusieurs signaux parasite(s) résultant d'autres communications entre des postes d'abonné dudit système de communication sans fil ; et
- comparaison desdits angles d'incidence détectés pour les crêtes desdits signaux de communication avec ceux détectés pour les crêtes desdits signaux parasites.

7. Procédé selon la revendication 6, **caractérisé en ce que**, des valeurs supérieures de la marge M correspondant à des valeurs inférieures de la puissance parasite I sont données pour ledit deuxième jeu de paramètres de communication de référence (I2, M2), si ledit angle d'incidence détecté pour ladite crête dudit signal de communication et ledit angle d'incidence détecté pour ladite crête desdits signaux parasites sont égaux, tandis que des valeurs inférieures de la marge M correspondant à des valeurs supérieures de la puissance parasite I sont données pour ledit deuxième jeu de paramètres de communication de référence (12, M2), si ledit angle d'incidence détecté pour ladite crête dudit signal de communication et ledit angle d'incidence détecté pour ladite crête desdits signaux parasites diffèrent d'environ 180°.

8. Procédé selon la revendication 7, **caractérisé en ce que**, des valeurs intermédiaires I2i, M2i ; avec M2₁₈₀ < M2i < M1 et I2₁₈₀ > 12i > I1 ; sont données pour ledit deuxième jeu de paramètres de communication de référence (12, M2) si la différence entre si ledit angle d'incidence détecté pour ladite crête dudit signal de communication et ledit angle d'incidence détecté pour ladite crête desdits signaux parasites se trouve dans une plage de valeurs se situant entre les deux plages de valeurs définies pour les positions 0° et 180°.

9. Procédé selon l'une des revendications précédentes, dans lequel ledit procédé d'acquisition de canal est utilisé pour l'acquisition d'un canal pour la communication avec au moins une autre paire de postes d'abonné (Sj, Sk ; 1 ≤ j ≤ n, j ≠ x, 1 ≤ k ≤ n, k ≠ y).

10. Poste d'abonné pour système de communication sans fil comportant une antenne directionnelle et des moyens de mise en oeuvre du procédé conforme à une des revendications 1 à 9.
